**Europäisches Patentamt**

**European Patent Office**

**Office européen des brevets**

(19)

(11) Veröffentlichungsnummer : **0 131 721 B1**

(12)

# EUROPÄISCHE PATENTSCHRIFT

(45) Veröffentlichungstag der Patentschrift :
**20.01.88**

(21) Anmeldenummer : **84106051.0**

(22) Anmeldetag : **28.05.84**

(51) Int. Cl.⁴ : **C 25 D 13/06, C 09 D 3/66, C 09 D 3/58, C 09 D 5/02**

(54) **Verfahren zur Herstellung wasserverdünnbarer Beschichtungsmittel.**

(30) Priorität : **03.06.83 AT 2034/83**

(43) Veröffentlichungstag der Anmeldung :
**23.01.85 Patentblatt 85/04**

(45) Bekanntmachung des Hinweises auf die Patenterteilung : **20.01.88 Patentblatt 88/03**

(84) Benannte Vertragsstaaten :
**BE CH DE FR GB IT LI NL SE**

(56) Entgegenhaltungen :
**EP-A- 0 032 554**
**EP-A- 0 049 868**
**DE-B- 2 248 836**
**US-A- 3 933 579**

(73) Patentinhaber : **Vianova Kunstharz Aktiengesellschaft A-8402 Werndorf (AT)**

(72) Erfinder : **Dworak, Gert, Dr.**
**Dr. Robert Grafstrasse 25**
**A-8010 Graz (AT)**
Erfinder : **Staritzbichler, Werner, Dr.**
**Im Hoffeld 6**
**A-8046 Graz (AT)**

(74) Vertreter : **Pitter, Robert, Dr. et al**
**Leechgasse 21 Postfach 191**
**A-8010 Graz (AT)**

**Beschreibung**

Die Erfindung betrifft wasserverdünnbare Überzugsmittel, welche als Bindemittelkomponente eine Kombination aus einem filmbildenden, wasserlöslichen, mit Phosphor- bzw. Phosphonsäure modifizierten Kunstharz und einem darin suspendierten pulverförmigen Polymeren enthalten.

Suspensionen von pulverförmigen Polymeren in wasserverdünnbaren Bindemitteln für den Einsatz in der Elektrotauchlackierung sind beispielsweise in der DE-AS 22 48 836 oder der DE-PS 30 44 447 oder der EP-A 00 21 071 beschrieben. Bei diesem auch als Electro-Powder-Coating (EPC) bekanntgewordenen Verfahren wird versucht, eine einer Trockenpulverbeschichtung möglichst nahekommende Beschichtung aus einem wäßrigen Medium auf elektrischem Wege zu applizieren.

Für den normalen Spritzauftrag werden in der Literatur in größerer Zahl Pulversuspensionen beschrieben, welche ausschließlich Wasser und geringe Mengen von Suspendierhilfsmitteln enthalten. Auch in diesem Fall ist die Herstellung einer Pulverlackbeschichtung aus wäßrigem Medium Ziel der beanspruchten Maßnahmen.

Die zusätzliche Verwendung von Polymerpulvern in Lacken zur Erzielung besonderer Effekte, wie Texturierung der Oberfläche, oder zur Erzielung mattierter Filme ist in den GB-PSen 1,089,542 bzw. 1,288,583 beschrieben.

In neuerer Zeit werden Suspensionen von Pulverharzen in wasserverdünnbaren Bindemitteln dazu benutzt, um eine Erhöhung des Applikationsfestkörpers (bei entsprechender Viskosität des Überzugsmittels) zu erreichen. So werden in der DE-OS 26 01 618 Beschichtungsmittel vorgeschlagen, welche als Bindemittel eine Kombination aus einem mit Wasser verdünnbaren Maleinatöl und einem festen feinteiligen Polyester einer halogenhaltigen Polycarbonsäure enthalten, wobei der Polyester einen Halogengehalt zwischen 3 und 35 Gew.-% aufweist. Durch diese Zusammensetzung soll es möglich sein, Beschichtungsmittel zu erhalten, welche frei von organischen Hilfslösungsmitteln sind und welche trotz hohem Feststoffgehalt eine niedrige Viskosität aufweisen.

In der EP-A 00 15 035 wird das wasserlösliche Maleinatöl mit einem Epoxidharzpulver kombiniert, wobei das Beschichtungsmittel gegebenenfalls Vernetzungsmittel für das Epoxidharz in flüssiger oder fester Form enthält. Aufgrund ihrer Eigenschaften werden diese Bindemittel insbesonders für die Automobillackierung empfohlen. Die gemäß diesem Stand der Technik eingesetzten wasserlöslichen Maleinatöle zeigen zwar in ihrer Eigenschaft als Suspensionshilfsmittel gute Wirksamkeit, sind jedoch aufgrund ihrer ausgeprägten Vergilbungsneigung beim Einbrennen der Überzüge nur für Grundierungen und nicht für hellfarbige Decklacke oder Einschichtlackierungen geeignet. Überdies läßt sich mit diesen Kombinationen kaum eine ausgeglichene Relation zwischen einer praxisgerechten Korrosionsfestigkeit (bei ausreichendem Maleinatölanteil) und den geforderten mechanischen Eigenschaften, einem zufriedenstellenden Verlauf und einer guten Haftung auf dem jeweiligen Untergrund (bei ausreichendem Pulveranteil) erzielen.

Aus der EP-A 00 32 554 sind Bindemittelkombinationen für wasserverdünnbare Einbrennlacke bekannt, welche neben Amino- oder Phenolharzen Mischungen oder Cokondensate von wasserlöslichen Kunstharzen mit wasserlöslichen Epoxidharzestern, welche Gruppen der ortho-Phosphorsäure oder einer Hydroxylgruppen oder Vinylgruppen tragenden Phosphonsäure aufweisen, enthalten.

Es wurde nun gefunden, daß diese Bindemittelgruppe in Kombination mit festen, pulverförmigen Polymeren zu Beschichtungsmitteln verarbeitet werden kann. Diese Produkte zeigen sowohl hinsichtlich ihrer Suspensionsstabilität als auch bezüglich der erzielbaren Filmeigenschaften optimale Ergebnisse.

Die vorliegende Erfindung betrifft dementsprechend ein Verfahren zur Herstellung von wasserverdünnbaren Beschichtungsmitteln auf der Basis von Suspensionen von pulverförmigen Polymeren in wasserverdünnbaren Harzbindemitteln, welches dadurch gekennzeichnet ist, daß man

(A) 5-70 Gew.-%, vorzugsweise 25-50 Gew.-% eines festen pulverförmigen Polymeren mit einem zwischen 40 und 200 °C liegenden Schmelzbereich und einer mittleren Teilchengröße zwischen 1 und 200 μm, vorzugsweise zwischen 5 und 50 μm,

(B) 30-95 Gew.-%, vorzugsweise 50-75 Gew.-% (bezogen auf Festharz) einer wäßrigen Lösung eines nach Neutralisation mit Basen wasserverdünnbaren Cokondensats aus

(a) 10-90 Gew.-%, vorzugsweise 40-90 Gew.-%, eines fettsäuremodifizierten oder ölfreien Polyesterharzes, welches eine Säurezahl von mehr als 20 mg KOH/g aufweist und

(b) 10-90 Gew.-%, vorzugsweise 10-60 Gew.-%, eines gegebenenfalls mit Carbonsäuren modifizierten epoxidgruppenfreien Esters eines Epoxidharzes mit ortho-Phosphorsäure und/oder Vinylgruppen tragenden Phosphonsäure, mit einer Säurezahl von 12-300 mg KOH/g, vorzugsweise 30-150 mg KOH/g, und gegebenenfalls

(C) 5-40 Gew.-%, vorzugsweise 10-30 Gew.-% eines üblichen Vernetzungsmittels für das Cokondensat auf Basis von Amino- oder Phenolharzen,

vorzugsweise zusammen mit den üblichen bei Lacken und Grundierungen eingesetzten Hilfsstoffen und Zusatzmitteln homogenisiert.

Die erfindungsgemäß erhaltenen Überzugsmittel zeichnen sich gegenüber den bisher bekannten Produkten in mehrfacher Hinsicht aus. Durch die Modifizierung des Trägerharzes mit Phosphor- bzw. Phosphonsäuren und der Auswahlmöglichkeit im Alkydharzanteil können gilbungsfreie Überzugsmittel formuliert werden, welche auch für Deck- und Einschichtlacke geeignet sind. Gegenüber anderen Suspendierungshilfsmitteln ermöglichen die erfindungsgemäß eingesetzten Harze durch entsprechende Auswahl der Rohstoffe im Alkydharz-Teil eine weitgehende Steuerung sowohl der rheologischen Eigenschaften des Systems als auch der Filmeigenschaften. Durch die Phosphorsäure- (bzw. Phosphon)- säuregruppen wird überdies eine Verbesserung der Haftung und der Korrosionsfestigkeit der Filme erzielt. Durch die starke Acidität dieser Gruppen erfolgt außerdem eine katalytische Beschleunigung der Vernetzungsreaktionen.

Als pulverförmiges Polymeres (A) können im wesentlichen die üblichen in der Lackindustrie eingesetzten Pulverlackmaterialien auf der Basis von Epoxidharzen, Polyesterharzen, Acrylatharzen, Polyurethanharzen usw. eingesetzt werden, soferne ihr Erweichungspunkt über 40 °C liegt. Bei niedrigeren Erweichungspunkten besteht die Gefahr des Zusammensinterns. Damit die Pulverlacke ohne besondere Wärmebelastung in die flüssige Phase des Überzugsmittels eingearbeitet werden können, soll die Korngröße des Pulvers in Bereichen liegen, welche eine weitere Vermahlung in der Mischung überflüssig macht. Die brauchbaren Bereiche liegen zwischen 1 und 200 μm, vorzugsweise zwischen 5 und 50 μm.

Besonders bevorzugt werden mikronisierte Typen mit Korngrößen zwischen 5 und 25 μm. Die Pulvermaterialien können, wie üblich, auch Pigmente und/oder Härtungsmittel enthalten, doch ist dies bei der guten Vernetzungsfähigkeit des Trägerharzes nicht unbedingt nötig. Für spezielle Einsatzzwecke, wie bei Steinschlagschutzfüllern oder anderen Unterbodenschutzmaterialien in der Kraftfahrzeugindustrie, können auch reaktionsinerte Pulvermaterialien aus Polyolefinen, PVC oder kautschukähnlichen Materialien eingesetzt werden.

Als Trägerharz (B) werden gemäß der vorliegenden Erfindung Cokondensate aus fettsäuremodifizierten oder ölfreien Polyesterharzen (Alkydharzen) und Epoxidharzestern, welche als Säurekomponente Phosphorsäuren aufweisen, eingesetzt. Produkte dieser Art werden in der in der Einleitung angeführten EP-A 00 32 554 beschrieben. Die zur Cokondensation gelangenden Polyesterharze weisen eine Säurezahl von mehr als 20 mg KOH/g auf.

Die Epoxidharzesterkomponente ist für sich nach Neutralisation mit Basen wasserlöslich. Als Phosphorsäureanteil können dabei gemäß der EP-A 00 32 554 sowohl ortho-Phosphorsäure, als auch Hydroxy- oder Vinylphosphonsäuren eingesetzt werden. Die aus den Phosphorsäuren resultierende Säurezahl liegt zwischen 12 und 300 mg KOH/g, vorzugsweise zwischen 30 und 150 mg KOH/g. Die Cokondensation erfolgt bei 120-180 °C, gegebenenfalls unter Entfernung des in den Vorstufen enthaltenden Lösungsmittels, bis zur Erzielung einer ausreichenden Verträglichkeit, welche in einem weitgehenden Verschwinden von Trübungen, insbesonders im erkalteten Zustand, erkennbar ist. Das Cokondensat wird nach Neutralisation aller oder eines Teiles der Säuregruppen in Wasser dispergiert, wobei eine weitgehend klare oder nur opake Lösung bevorzugt wird.

Aus den Komponenten (A) und (B) wird die Bindemittelgrundlage des Überzugsmittels durch gründliche Homogenisierung der Pulverkomponente in der wäßrigen Lösung des Cokondensats hergestellt. Die Mengenverhältnisse zwischen den Komponenten liegen dabei im folgenden Rahmen :

Komponente (A)      5-70 Gew.-%, vorzugsweise 25-50 Gew.-%
Komponente (B)      30-95 Gew.-%, vorzugsweise 50-75 Gew.-%.

Die Homogenisierung erfolgt in üblichen Aggregaten, vorteilhafterweise in Sand- oder Perlmühlen. In allen Fällen ist selbstverständlich darauf zu achten, daß keine Temperaturen erreicht werden, welche ein Sintern oder Zusammenbacken der Pulvermaterialien bewirken könnten. Im Anschluß an die Homogenisierung ist der pH-Wert zu überprüfen und im Bedarfsfall auf einen Wert von 7,5-9,5 nachzustellen. Für die Verdünnung auf Applikationsviskosität ist, wie bei wäßrigen Lacksystemen üblich, deionisiertes oder destilliertes Wasser zu verwenden.

Gegebenenfalls können die erfindungsgemäßen Lackkombinationen zusätzliche Vernetzungskomponenten in Form wasserverdünnbarer Amino- oder Phenolharze in Mengen von 5-50 Gew.-%, vorzugsweise 10-30 Gew.-% enthalten. Diese Komponente (C) wird vorteilhaft bei der Homogenisierung der Komponenten (A) und (B) zugegeben. Zu diesem Zeitpunkt werden auch gegebenenfalls weitere Lackbestandteile, wie zusätzliche Pigmente, Füllstoffe, Additive etc. zugesetzt. Die Vernetzungsmittel und Zusätze sind dem Fachmann bekannt und bedürfen daher keiner detaillierten Erklärung.

Die erfindungsgemäß hergestellten Überzugsmittel können sowohl als korrosionsfeste Grundierungen oder als dekorative Deck- oder Einschichtlacke formuliert werden. Aufgrund ihrer universellen Eigenschaften eignen sie sich besonders für Zwischenschichten, wie Autofüller, wo sowohl ihre korrosionsschützende Wirkung, als auch ihre hervorragenden mechanischen Eigenschaften besonders zum Tragen kommen.

In den folgenden Beispielen wird anhand der Herstellung, Verarbeitung und Prüfung von Produkten die Erfindung erläutert, ohne daß dadurch der Umfang der Anmeldung, wie er durch die Ansprüche gegeben ist, eingeschränkt wird.


Beispiel 1


(a) 210 g Rizinusöl, 90 g Phthalsäureanhydrid, 100 g Benzoesäure, 90 g Trimethylolpropan, 80 g Monopentaerythrit und 88 g Adipinsäure werden im Azeotropverfahren bei 230 °C bis zu einer Säurezahl von weniger als 4 mg KOH/g verestert. Nach Kühlen auf 110 °C werden 100 g Tetrahydrophthalsäureanhydrid zugegeben und die Veresterung nach Zugabe von 33 g von Benzin-Kohlenwasserstoffen mit einem Siedebereich zwischen 80 und 120 °C bis zu einer Säurezahl von 56 mg KOH/g weitergeführt.

(b) In einer anderen Alkydharzapparatur werden 190 g eines flüssigen Epoxidharzes vom Bisphenol-A-Typ (Epoxidäquivalent 186-192) auf 150 °C erwämt und innerhalb einer Stunde mit 84 g Leinölfettsäure versetzt und bis zu einer Säurezahl von weniger als 1 mg KOH/g verestert. Der Ansatz wird bei 75 °C mit einer Mischung von Methyläthylketon und Isopropanol (1 : 1) auf einen Festkörpergehalt von 65 % verdünnt.

(c) In einem mit ausreichender Kühlung ausgestattetem Rührgefäß wird eine Lösung von 26 g einer 75 %igen wäßrigen ortho-Phosphorsäure, 21 g Methyläthylketon und 21 g Isopropanol vorgelegt. Bei ca. 50 °C werden 421 g der in Stufe (b) erhaltenen 65 %igen Harzlösung innerhalb von 90 Minuten zugegeben, wobei eine Temperatur von 50 °C beibehalten wird. Die Temperatur wird aufrechterhalten, bis ein Epoxidwert von weniger als 0,01 erreicht ist. Das Reaktionsprodukt weist eine Säurezahl von 59 mg KOH/g und eine Viskosität, gemessen nach DIN 53 211/20 °C von 25 Sekunden auf.

(d) 209 g des Alkydharzes aus Stufe (a) und 314 g des Phosphorsäureesters aus Stufe (c) werden unter Abdestillieren des Lösungsmittels bei 140 °C solange kondensiert, bis eine auf einer Glasplatte erkaltete Probe klar bleibt. Das Reaktionsprodukt, welches eine Säurezahl von 56 mg KOH/g aufweist, wird auf 95 °C gekühlt und mit einer Mischung aus 28 g Dimethyläthanolamin und 572 g Wasser auf einen Festkörpergehalt von 40 % verdünnt. Der pH-Wert einer 10 %igen wäßrigen Lösung beträgt 7,7.

(e) 150 g der 40 %igen Lösung (d) werden mit 40 g mikronisiertem Epoxidharzpulver (Bisphenol-A-Basis ; Molekulargewicht ca. 1400 ; Erweichungstemperatur 90-100 °C ; Korngröße ca. 10-20 $\mu$m), 60 g $TiO_2$ (Rutil) und 36 g Wasser gemischt und auf einer Perlmühle homogenisiert. Der Dispergieransatz wird dann mit 18,5 g Hexamethoxymethylmelamin versetzt und mit Dimethyläthanolamin auf einen pH-Wert von ca. 8-8,4 eingestellt. Der Lack weist einen Gesamtfestkörpergehalt von 70 % und einen Harzgehalt von 50 % auf.

(f) Die Prüfung des Lackes erfolgt nach einer Lagerung von 20 Stunden bei Raumtemperatur. Die Auslaufzeit des Lackes beträgt ca. 30 Sekunden nach DIN 53 211/20 °C.

Der Lack wurde durch Spritzen auf entfettetes Automobilblech aufgebracht und 20 Minuten bei 170 °C gehärtet, wobei eine Trockenfilmstärke von ca. 40 $\mu$m resultierte.

Folgende Prüfwerte wurden erhalten :

| | |
|---|---|
| Tiefung nach ERICHSEN DIN 53 156 : | 8 mm |
| Pendelhärte nach KÖNIG DIN 53 157 : | 130 s |
| Schlag nach GARDNER : | 4 480 mm kp (80 inch pound) |
| Tropentest 40 °C/100 % rel. Luftfeuchtigkeit : | 200 Stunden +) |

(+) nach der angegebenen Prüfzeit sind keine Bläschen, Rostangriffe oder Aufweichungen feststellbar)

| | |
|---|---|
| Salzsprühtest ASTM B 117-64 : | 144 Stunden ++) |
| auf zinkphosphatiertem Stahlblech : | 500 Stunden ++) |

(++) nach der angegebenen Prüfzeit betrug die mit einer Spatel entfernbare Randzone am Kreuzschnitt weniger als 2 mm)

Beispiel 2

(a) Gemäß den Angaben in Beispiel 1 (a) wird ein Grundalkydharz mit einer Säurezahl von weniger als 4 mg KOH/g hergestellt. Nach Kühlen auf 110 °C werden diesem Ansatz 40 g Tetrahydrophthalsäureanhydrid zugegeben und die Veresterung nach Zugabe von 30 g von Benzin-kohlenwasserstoffen mit einem Sieberreich zwischen 80 und 120 °C bis zu einer Säurezahl von ca 24 mg KOH/g weitergeführt.

(b) 524 g des gemäß Beispiel 2 (a) hergestellten Alkydharzes werden mit 781 g des gemäß Beispiel 1 (c) erhaltenen Epoxidharz-Phosphorsäureesters vermischt und unter Abdestillieren des Lösungsmittels bei 140 °C solange kondensiert, bis eine auf einer Glasplatte erkaltete Probe klar bleibt. Das Reaktionsprodukt, welches eine Säurezahl von 33 mg KOH/g aufweist, wird auf 90 °C gekühlt und mit einer Mischung aus 57 g Dimethyläthanolamin und 1 443 g deionisiertem Wasser auf einen Festkörpergehalt von 40 Gew.-% verdünnt. Der pH-Wert einer 10 %igen wäßrigen Lösung beträgt 8,5.

(c) 195 g der nach (b) erhaltenen 40 %igen Harzlösung werden mit 33 g eines mikronisierten Pulvers auf Basis eines cyclischen Kautschuks (Schmelzbereich 115-127 °C ; Korngröße 5-30 $\mu$m ; im Handel unter der Bezeichnung ALPEX® CK 514, HOECHST AG erhältlich), sowie 60 g Titandioxid (Rutil) und 47 g deionisiertem Wasser gemischt und auf einer Perlmühle homogenisiert. Nach Zugabe von 17 g Hexamethoxymethylmelamin und weiteren 18 g deionisiertem Wasser weist der Lack einen Gesamtfestkörper von 53 %, einen pH-Wert von ca. 8,5 und eine Auslaufzeit (DIN 53 211/20 °C) von 30 Sekunden auf.

(d) Die Prüfung erfolgte nach einer Lagerung des Lackes von ca. 20 Stunden (20-25 °C).

Der Lack wurde durch Spritzen auf entfettetes Automobilblech aufgebracht und 20 Minuten bei 150 °C eingebrannt, wobei eine Trockenfilmstärke von ca. 40 $\mu$m resultierte.

Folgende Prüfwerte wurden erhalten :

| Tiefung nach ERICHSEN DIN 53 156 : | 5 mm |
|---|---|
| Pendelhärte nach KÖNIG DIN 53 157 : | 145 s |
| Schlag nach GARDNER : | 2 800 mm kp (50 inch pound) |
| Tropentest +) : | 400 Stunden |
| Salzsprühtest +) ASTM B 117-64 : | 120 Stunden |
| auf zinkphosphatiertem Stahlblech : | 400 Stunden |

+) Bedingungen und Auswertung wie in Beispiel 1.

**Patentansprüche**

1. Verfahren zur Herstellung von wasserverdünnbaren Beschichtungsmitteln auf der Basis von Suspensionen von pulverförmigen Polymeren in wasserverdünnbaren Harzbindemitteln, dadurch gekennzeichnet, daß man

(A) 5-70 Gew.-%, vorzugsweise 25-50 Gew.-%, eines festen pulverförmigen Polymeren mit einem zwischen 40 und 200 °C liegenden Schmelzbereich und einer mittleren Teilchengröße zwischen 1 und 200 μm, vorzugsweise zwischen 5 und 50 μm,

(B) 30-95 Gew.-%, vorzugsweise 50-75 Gew.-% (bezogen auf Festharz) einer wäßrigen Lösung eines nach Neutralisation mit Basen wasserverdünnbaren Cokondensats aus

(a) 10-90 Gew.-%, vorzugsweise 40-90 Gew.-% eines fettsäuremodifizierten oder ölfreien Polyesterharzes, welches eine Säurezahl von mehr als 20 mg KOH/g aufweist und

(b) 10-90 Gew.-%, vorzugsweise 10-60 Gew.-%, eines gegebenenfalls mit Carbonsäuren modifizierten epoxidgruppenfreien Esters eines Epoxidharzes mit ortho-Phosphorsäure und/oder einer Hydroxylgruppen und/oder Vinylgruppen tragenden Phosphonsäure mit einer Säurezahl von 12-300 mg KOH/g, vorzugsweise 30-150 mg KOH/g und gegebenenfalls

(C) 5-40 Gew.-%, vorzugsweise 10-30 Gew.-% eines üblichen Vernetzungsmittels für das Cokondensat auf Basis von Amino- oder Phenolharzen, vorzugsweise zusammen mit den üblichen bei Lacken und Grundierungen eingesetzten Hilfsstoffen und Zusatzmitteln homogenisiert.

2. Verfahren nach Anspruch 1, dadurch gekennzeichnet, daß man als pulverförmige Polymere (Komponente A) Pulverlackmaterialien auf Epoxidharz-, Polyester-, Acrylat- oder Polyurethanbasis einsetzt.

3. Verfahren nach Anspruch 1, dadurch gekennzeichnet, daß man als pulverförmige Polymere (Komponente A) kautschukartige Materialien in feinverteilter Form einsetzt.

4. Verfahren nach Anspruch 3, dadurch gekennzeichnet, daß man als pulverförmige Polymere mikronisierte Pulver auf Basis von cyclisiertem Kautschuk oder Polyolefinen einsetzt.

5. Verfahren nach den Ansprüchen 1 bis 4, dadurch gekennzeichnet, daß die Pulvermaterialien eine Korngröße zwischen 5 und 25 μm aufweisen.

6. Verfahren nach Anspruch 1, dadurch gekennzeichnet, daß die Cokondensation zwischen den Zwischenprodukten (a) und (b) der Komponente (B) soweit geführt wird, bis eine erkaltete Probe der Reaktionsmasse klar bleibt.

7. Verwendung der gemäß den Ansprüchen 1 bis 6 hergestellten Bindemittel, gegebenenfalls nach Zusatz von Pigmenten, Füllstoffen und üblichen anderen Lackzusätzen, als korrosionsfeste Grundierungen, Füllermaterialien für die Automobillackierung oder als dekorative Einschichtlacke.

8. Verwendung der gemäß den Ansprüchen 1 bis 6 hergestellten Bindemittel als Materialien für den Unterbodenschutz von Kraftfahrzeugen.

**Claims**

1. Process for producing water dilutable coating compositions based on suspensions of powder form polymers in water dilutable resin binders, characterised in that

(A) 5-70 % by weight, preferably 25-50 % by weight of a solid powder form polymer with a melting range of between 40 and 200 °C and an average particle size of between 1 and 200 μm preferably 5 and 50 μm,

(B) 30-95 % by weight, preferably 50-75 % by weight (calculated on resin solids) of an aqueous solution of a cocondensate, water dilutable on neutralisation of

(a) 10-90 % by weight, preferably 40-90 % by weight of a fatty acid modified or oil-free polyester resin with an acid value of over 20 mg KOH/g, and

(b) 10-90 % by weight, preferably 10-60 % by weight of an epoxy-free ester of an epoxy resin, optionally modified with carboxylic acids, of ortho-phosphoric acid and/or of a phosphonic acid carrying hydroxy and/or vinyl groups, with an acid value of from 12-300 mg KOH/g, preferably 30-150 mg KOH/g, and optionally

(C) 5-40 % by weight, preferably 10-30 % by weight of a normal crosslinking agent for the cocondensate, based on amine or phenolic resins, are homogenized, preferably together with the auxiliary agents and additives used in paints and primers.

2. Process according to claim 1, characterised in that the powder form polymer (component A) is a powder material based on epoxy resins, polyester resins, acrylic resins or polyurethane resins.

3. Process according to claim 1, characterised in that as the powder form polymer (component A) fine particle caoutchouc materials are used.

4. Process according to claim 3, characterised in that as the powder form polymers micronised powders based on cyclised rubber or polyolefines are used.

5. Process according to claims 1 to 4, characterised in that the powder materials have a grain size of between 5 and 25 μm.

6. Process according to claim 1, characterised in that the cocondensation between the intermediate products (a) and (b) of component (B) is carried to an extent such that a cooled sample of the reaction mass remains clear.

7. Use of the binders prepared according to claims 1 to 6, optionally after the addition of pigments, extenders and other normal paint additives, as anticorrosive primers, fillers for the automobile industry or as decorative single coats.

8. Use of the binders prepared according to claims 1 to 6 as materials for underbody protection of automobiles.

**Revendications**

1. Procédé pour la préparation de compositions ou produits de revêtement diluables à l'eau à base de suspensions de polymères pulvérulents dans des liants de résine diluables à l'eau, caractérisé en ce que l'on homogénéise de préférence conjointement avec les adjuvants et additifs usuels mis en œuvre dans les peintures et couches de fond :

(A) 5-70 % en poids, de préférence 25-50 % en poids d'un polymère pulvérulent solide présentant un domaine de fusion situé entre 40 et 200 °C et une granulométrie moyenne située entre 1 et 200 μm, de préférence entre 5 et 50 μm,

(B) 30-95 % en poids, de préférence 50-75 % en poids (par rapport à la résine solide) d'une solution aqueuse d'un cocondensat diluable à l'eau après neutralisation avec des bases, condensat constitué par

(a) 10-90 % en poids, de préférence 40-90 % en poids, d'une résine polyester modifiée par des acides gras ou exempte d'huile, laquelle présente un indice d'acide supérieur à 20 mg de KOH/g, et

(b) 10-90 % en poids, de préférence 10-60 % en poids d'un ester exempt de groupe époxy éventuellement modifié par des acides carboxyliques d'une résine époxy avec de l'acide orthophosphorique et/ou de l'acide phosphonique porteur de groupes hydroxyle et/ou vinyle, présentant un indice d'acide de 12-300 mg de KOH/g, de préférence de 30-150 mg de KOH/g, et éventuellement

(C) 5-40 % en poids, de préférence 10-30 % en poids, d'un agent réticulant usuel pour le cocondensat à base de résines amino ou phénoliques.

2. Procédé selon la revendication 1, caractérisé en ce que l'on met en œuvre en tant que polymère pulvérulent (composant A) des matériaux de peinture en poudre à base de résine époxy, de polyester, d'acrylate ou de polyuréthane.

3. Procédé selon la revendication 1, caractérisé en ce que l'on met en œuvre en tant que polymère pulvérulent (composant A) des matériaux du type caoutchouc sous forme finement divisée.

4. Procédé selon la revendication 3, caractérisé en ce qu'en tant que polymère pulvérulent, on met en œuvre des poudres micronisées à base de caoutchouc cyclisé ou de polyoléfines.

5. Procédé selon les revendications 1 à 4, caractérisé en ce que les matériaux pulvérulents présentent une granulométrie entre 5 et 25 μm.

6. Procédé selon la revendication 1, caractérisé en ce que la cocondensation entre les produits intermédiaires (a) et (b) du composant (B) est poursuivie jusqu'à ce qu'un échantillon refroidi de la masse réactionnelle demeure limpide.

7. Utilisation des liants préparés selon les revendications 1 à 6, le cas échéant après addition de pigments, de matières de charge et d'autres additifs de peinture usuels, en tant que couches de fond résistantes à la corrosion, de « sealers » ou matériaux de remplissage pour la peinture automobile ou en tant que peinture monocouche décorative.

8. Utilisation des liants selon les revendications 1 à 6 en tant que matériaux pour la protection des dessous de carrosseries des véhicules automobiles.